Europäisches Patentamt

European Patent Office

Office européen des brevets

(19)

(11) Veröffentlichungsnummer : **0 092 507**
**B1**

(12) # EUROPÄISCHE PATENTSCHRIFT

(45) Veröffentlichungstag der Patentschrift :
02.12.87

(21) Anmeldenummer : 83730039.1

(22) Anmeldetag : 13.04.83

(51) Int. Cl.⁴ : **B 65 G 47/50**, B 65 G 51/46

(54) Förderanlage mit Sende- und Empfangsstation, die jeweils individuelle Steuersätze aufweisen, die über einen Datenbus an eine zentrale Programmsteuereinrichtung angeschlossen sind.

(30) Priorität : 21.04.82 DE 3215301

(43) Veröffentlichungstag der Anmeldung :
26.10.83 Patentblatt 83/43

(45) Bekanntmachung des Hinweises auf die Patenterteilung : 02.12.87 Patentblatt 87/49

(84) Benannte Vertragsstaaten :
AT CH DE FR GB LI

(56) Entgegenhaltungen :
EP-A- 0 021 888
EP-A- 0 048 188
DE-A- 2 748 448
TELCOM REPORT, Band 5, Nr. 2, 21. April 1982,. Seiten 87-91, Passau, DE., H.J. KARDINAL: "Rohrpostsystem SIMACOM 100 MC - ein Akten- und Materialverteilungssystem mit programmierter Funktionssicherheit"
A LINK BETWEEN SCIENCE AND APPLICATIONS OF AUTOMATIC CONTROL, PROCEEDINGS OF THE SEVENTH TRIENNIAL WORLD CONGRESS OF THE INTERNATIONAL FEDERATION OF AUTOMATIC CONTROL, 12.-16. Juni 1978, Helsinki, Finland, Band 3, Seiten 2257-2261, Pergamon Press, Oxford, GB., J. PONTOPPIDAN: "Automatic control and monitoring"
SIEMENS ZEITSCHRIFT, Band 45, Heft 7, Juli 1971, Seiten 460-468, G. RATH et al.: "Förderanlage mit Auswahlautomatik für das programmgesteuerte Bereitstellen von Motoren und Achsen in der Automobil-Endmontage"

(73) Patentinhaber : Siemens Aktiengesellschaft Berlin und München
Wittelsbacherplatz 2
D-8000 München 2 (DE)

(72) Erfinder : Dziggel, Klaus-Peter, Ing. grad.
Küsterstrasse 18
D-1000 Berlin 20 (DE)
Erfinder : Rowe, Kenneth
37, Arminers Close
Gosport Hants PO 12 1BG (GB)

EP 0 092 507 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Förderanlage mit Sende- und Empfangsstationen, die jeweils individuelle Steuersätze aufweisen, die jeweils mit einem Adressendecoder an Adressenleitungen und einem ausgangsseitig mit Stell- und Anzeigevorrichtungen sowie eingangsseitig mit Zustandsregistern verbundenen Operationsdecodereinrichtung an Steuerleitungen eines an eine zentrale Programmsteuereinrichtung mit einem Rechner angeschlossenen Datenbus angeschaltet sind.

Eine derartige, aus der DE-OS 2 748 448 bekannte Steuerungsstruktur bietet den Vorteil, daß für Förderanlagen sowohl mit beliebigem Aufbau von Sende- und Empfangsstationen als auch mit beliebigem Verlauf von Transportsträngen zwischen den Stationen jeweils ein zumindest im Prinzip gleicher Aufbau der Steuersätze der Stationen möglich ist und insbesondere ein von Änderungen der Stationen oder der Anlagenstruktur weitestgehend unabhängiger Leitungsverlauf ermöglicht ist. Alle Steuersätze sind gleichwertig parallel an den Datenbus angeschlossen, der Adressenleitungen und Steuerleitungen aufweist. Sämtliche Steuersätze befinden sich im Prinzip im Empfangszustand und die Ansteuerung aller Steuersätze erfolgt mit Hilfe der Adresseninformationen.

Jeweils nur ein einziger Steuersatz ist aktivierbar, und die Aktivierung erfolgt durch die zentrale Programmsteuereinrichtung, während eine Übertragung von Adresseninformationen, Zielinformationen, Operationsinformationen und Quittungsinformationen zwischen einzelnen Steuersätzen ausgeschlossen ist.

Sofern neben den Sende- und Empfangsstationen zusätzliche Antriebs-, Umlenk- oder Sperreinrichtungen vorgesehen sind, wird die Steuerungsstruktur auch auf diese Einrichtungen ausgedehnt. Die Einrichtungen sind demzufolge ebenfalls mit an ihre Stell- und Signaleinrichtungen angepaßten Steuersätzen parallel an den Datenbus angeschlossen, und die Programmsteuereinrichtung bezieht diese Steuersätze in gleicher Weise in das Steuerprogramm ein wie die Steuersätze der Sende und Empfangsstationen.

Im Falle von Störungen, aber auch im Verlauf von Routinetests müssen bestimmte Schaltzustände in den Steuersätzen bzw. in der zentralen Steuereinrichtung hergestellt bzw. überprüft werden. Dazu werden im allgemeinen normale Sende bzw. Empfangsvorgänge eingeleitet, wozu eine manuelle Betätigung beispielsweise von Zielwähleinrichtungen und Sendetasten, aber auch das manuelle Einbringen von Förderbehältern in die Förderanlage — beispielsweise das Eingeben von Rohrpostbüchsen in den Sendespeicher einer Rohrpoststation — gehört. Dabei lassen sich bestimmte Zustände der Steuerung nur durch Eingriffe in Steuerungsbestandteile der Stationen bzw. der zentralen Programmsteuereinrichtung realisieren. Insbesondere wegen der teilweise erheblichen räumlichen Entfernungen der einzelnen Sende- und Empfangsstationen voneinander bzw. von der zentralen Programmsteuereinrichtung erweisen sich solche Prüfungen und Routinetests in der Praxis als außerordentlich aufwendig und zeitraubend.

Die der Erfindung zugrunde liegenden Aufgabe besteht darin, die eingangs definierte Förderanlage bzw. die dieser zugeordnete Steuerungsstruktur derart auszugestalten, daß Prüfungen der Schaltzustände und Wirkungsweisen der Steuerung bzw. einzelner Bestandteile derselben einfach und zugleich zuverlässig durchführbar sind. Dies wird erfindungsgemäß dadurch erreicht, daß an der zentralen Programmsteuereinrichtung eine Tastaturbaugruppe und eine mehrstellige optische Anzeigevorrichtung angeordnet sind und daß mittels einer Tastaturbetätigung der Rechner zur Abgabe von Adreßsignalen und Operationsignalen oder Zustandsabfragesignalen an den Datenbus im Sinne der Auslösung von entsprechenden Operationen oder Zustandsabfragen in den jeweils adressierten Steuersätzen sowie zur Abgabe entsprechender Signale an die Anzeigevorrichtung im Sinne der Anzeige der jeweiligen Operationen und der jeweils an den Datenbus übergebenen Zustandsinformationen aus den Zustandsregistern veranlaßt ist.

Das Simulieren bestimmter Schaltvorgänge in der Steuerung erfolgt von der zentralen Programmsteuereinrichtung aus durch Eintasten von Informationen, die in entsprechende Schaltvorgänge umgesetzt werden. Die an der Tastaturbaugruppe eingebbaren Informationen können beispielsweise derart aufgebaut sein, daß jeweils die ersten zwei Ziffern zur Bildung von insgesamt 99 verschiedenen Operationen oder Zustandsabfragen dienen, während zwei weitere Ziffern beispielsweise die Unterscheidung von ebenfalls 99 unterschiedlichen Sende- und Empfangsstationen ermöglichen.

Ein Beispiel für eine Eingabe mittels der Tastaturbaugruppe geht davon aus, daß in einer Rohrpoststation innerhalb einer Rohrpostanlage ein Stationsmotor ein verschiebbares Rohr innerhalb der Rohrpoststastion zuerst in eine mit einem Sendespeicher fluchtende Lage eingefahren und danach zurückgesetzt wird. Die zugehörige Eingabe in die Tastaturbaugruppe könnte beispielsweise « 4902 » heißen, wobei « 02 » das Zielkennzeichen der entsprechenden Station darstellt, während « 49 » von dem Rechner der zentralen Programmsteuereinrichtung als entsprechende Information zur Betätigung des Stationsmotors interpretiert wird. Die entsprechenden Einzelbefehle werden dann vom Rechner an den Datenbus abgegeben und führen zu entsprechenden Änderungen des Schaltzustandes von einzelnen Bauelenenten oder Baugruppen innerhalb der Sende- und Empfangsstationen ; dieser Schaltzustand kann wiederum durch entsprechende Eingabe von Informationen in die Tastaturbaugruppe abgefragt werden. So ist beispielsweise das Einfahren des Rohres der Rohrpoststation mit der Änderung der Information in einem dafür vorgesehenen Zustandsregister verbunden. Durch Eingabe beispielsweise der Information « 5002 » kann der Schaltzustand des Zustandsregisters abgefragt werden. Auf diese Art ist eine Überprüfung einzelner Bauelemente und Baugruppen sowie Schaltzustände von Stell- und Anzeigevorrichtungen überprüfbar.

Eine vorteilhafte Weiterbildung der Erfindung bezieht sich auf Prüfungen der Anlagensteuerung, bei der ein Förderbehälter in die Förderanlage eingegeben wird. Beispielsweise kann eine Rohrpostbüchse von einer Sendestation an eine Empfangsstation abgesandt werden, um den gesamten Verbindungsweg zu prüfen. In diesem Zusammenhang wird vorgesehen, daß mittels einer definierten Tastaturbetätigung programmgemäß ablaufende Folgen von Operationssignalen nach jedem Operationssignal unterbrochen und nach erneuter Tastaturbetätigung beim jeweils nächsten Operationssignal weitergeführt werden. Alle von den beteiligten Steuerungskomponenten auszuführenden Schaltvorgänge bzw. die von ihnen eingenommenen Zustände während des gesamten Ablaufs des Sende- bzw. Empfangsvorgangs können auf diese Weise in Einzelvorgänge aufgelöst werden, so daß eine schnelle, sichere Fehlerortung ermöglicht ist.

Die Erfindung wird im folgenden anhand eines schematisch dargestellten Ausführungsbeispiels erläutert.

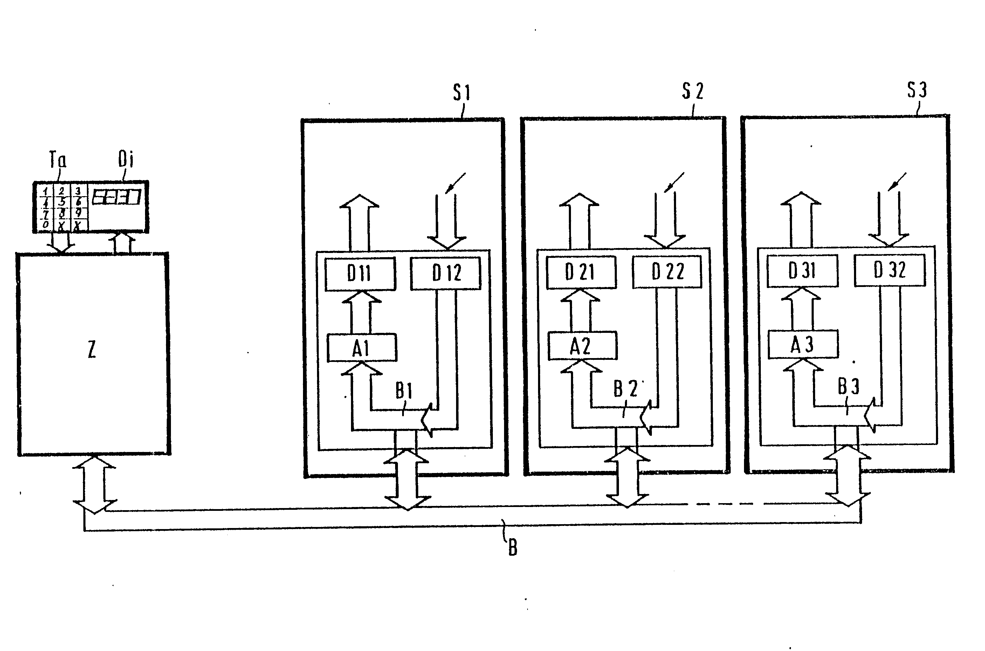

In der Figur sind drei Steuersätze S1, S2, S3 dargestellt, die jeweils einer als kombinierte Sende- und Empfangsstation arbeitenden Rohrpoststation zugeordnet sind.

Alle drei Steuersätze S1, S2, S3 sind an einen Datenbus B angeschlossen, der zu einer zentralen Programmsteuereinrichtung Z führt. Wesentlicher Besstandteil der zentralen Programmsteuereinrichtung Z ist ein Rechner, der in allgemeinen durch einen Mikrocomputer realisiert ist.

Wesentlicher Bestandteil der Steuersätze S1, S2, S3 ist jeweils ein Adressdecoder A1, A2, A3, mit deren Hilfe die von der Zentralprogrammsteuereinrichtung Z an den Datenbus B abgegebenen Adressen erkannt werden können. Bei Koinzidenz der angelegten Adresseninformation mit einem bestimmten Kennzeichen des Adressendecoders A1, A2 oder A3 ist der entsprechende Steuersatz S1, S2, S3 an den Datenbus B angeschaltet. Es können nunmehr über den internen Bus B1, B2, B3 Informationen an einen Operationsdecoder D11, D21, D31 abgegeben werden, der ausgangsseitig mit nicht dargestellten Stell- und Anzeigevorrichtungen verbunden ist. Ein weiterer Operationsdecoder D12, D22, D32 ist eingangsseitig mit Zustandsregistern verbunden und ist ausgangsseitig ebenfalls an den Datenbus (B) angeschlossen. Bei Koinzidenz der an den Datenbus B angelegten Adresse mit dem entsprechenden Kennzeichen eines der Adressdecoder A1, A2, A3 können die Informationen der Zustandsregister an den Datenbus B und damit an die zentrale Programmsteuereinrichtung Z übergeben werden.

Der Eingriff in die einzelnen Steuersätze S1, S2, S3 erfolgt bei Prüfung der gesamten Anlage durch die Tastaturbaugruppe Ta, in die Informationen eingegeben werden, die von dem Mikrocomputer der zentralen Rechnersteuerung in entsprechende anlagenkonforme Daten umgesetzt werden, die auf dem Datenbus B den Steuersätzen S1, S2, S3 angeboten werden. Die angegebene Information kann zugleich auf einem Display Di sichtbar gemacht werden. Wird mit der Tastaturbaugruppe Ta die Abfrage eines Zustandsregisters eingeleitet, so erfolgt neben der Anzeige der entsprechender Eingangsinformation auch eine Anzeige der Zustandsinformation, wobei die Zustandsinformation bevorzugt als binäre Information angezeigt wird.

**Patentansprüche**

1. Förderanlage mit Sende- und Empfangsstationen, die jeweils individuelle Steuersätze (S1, S2, S3) aufweisen, die jeweils mit einem Adressendecoder (A1, A2, A3) an Adressenleitungen und mit einer ausgangsseitig mit Stell- und Anzeigevorrichtungen sowie eingangsseitig mit Zustandsregistern verbundenen Operationsdecodereinrichtung (D11, D21, D31-D12, D22, D32) an Steuerleitungen eines an eine zentrale Programmsteuereinrichtung mit einem Rechner (Z) angeschlossenen Datenbus (B) angeschaltet sind, dadurch gekennzeichnet, daß an der zentralen Programmsteuereinrichtung (Z) eine Tastaturbaugruppe (Ta) und eine mehrstellige optische Anzeigevorrichtung (Di) angeordnet sind und daß mittels einer Tastaturbetätigung der Rechner zur Abgabe von Adreßsignalen und Operationssignalen oder Zustandsabfragesignalen an den Datenbus (B) im Sinne der Auslösung von entsprechenden Operationen oder Zustandsabfragen in den jeweils adressierten Steuersätzen (S1, S2, S3) sowie zur Abgabe entsprechender Signale an die Anzeigevorrichtung (Di) im Sinne der Anzeige der jeweiligen Operationen und der jeweils an den Datenbus (B) übergebenen Zustandsinformationen aus dem Zustandsregistern veranlaßt ist.

2. Förderanlage nach Anspruch 1, dadurch gekennzeichnet, daß mittels einer definierten Tastaturbetätigung programmgemäß ablaufende Folgen von Operationssignalen nach jedem Operationssignal unterbrochen und nach erneuter Tastaturbetätigung beim jeweils nächsten Operationssignal weitergeführt werden.

**Claims**

1. A conveyor system comprising transmitting and receiving stations, each of which is provided with individual control sets (S1, S2, S3), which are each connected by an address decoder (A1, A2, A3) to address lines and by an operations decoder device (D11, D21, D31-D12, D22, D32), which is connected at its output to adjusting and display devices and at its input to status registers, to control lines of a data bus (B) which is connected to a central programme control device with a computer (Z), characterised in that the central programme control device (Z) is provided with a keyboard assembly (Ta) and a multi-digit, optical display device (Di), and that by the actuation of the keyboard the computer is caused to emit address signals and operations signals or status interrogation signals to the data bus (B) in the sense of triggering corresponding operations of status interrogations in the respective addressed control sets (S1, S2, S3), and to emit corresponding signals to the display device (Di) in the sense of displaying the respective operations and the items of status information from the status registers which have each been transferred to the data bus (B).

2. A conveyor system as claimed in claim 1, characterised in that by means of a determinate actuation of the keyboard, programmed sequences of operations signals are interrupted following each operations signal, and following the re-actuation of the keyboard are continued with the next respective operations signal.

**Revendications**

1. Installation de transport comportant des stations d'envoi et de réception, qui possèdent respectivement des ensembles individuels de commande ($S_1$, $S_2$, $S_3$) qui sont raccordés, respectivement par des décodeurs d'adresses (A1, A2, A3), à des lignes de transmission d'adresses et, par un dispositif de décodage d'opérations (D11, D21, D31-D12, D22, D32), relié côté sortie à des dispositifs de réglage et d'affichage et côté entrée à des registres d'états, à des lignes de commande d'un bus (B) de transmission de données raccordé à un dispositif central de commande programmée comportant un calculateur (Z), caractérisé par le fait qu'un module formant clavier (Ta) et un dispositif d'affichage optique à plusieurs chiffres (Di) sont raccordés au dispositif central de commande programmée (Z) et qu'au moyen d'un actionnement du clavier, le calculateur est déclenché en vue de la délivrance de signaux d'adresses et de signaux d'opérations ou de signaux d'interrogation d'états au bus (B) de transmission de données, dans le sens d'un déclenchement d'opérations correspondantes ou d'interrogations correspondantes d'états dans les ensembles de commande (S1, S2, S3) respectivement adressés ainsi que pour l'envoi de signaux correspondants au dispositif d'affichage (Di) dans le sens de l'affichage des opérations respectives et des informations d'états provenant des registres d'états et retransmises respectivement au bus (B) de transmission de données.

2. Installation de transport suivant la revendication 1, caractérisée par le fait qu'à l'aide d'un actionnement défini du clavier, on interrompt après chaque signal d'opération des trains de signaux d'opérations qui se déroulent suivant un programme et qu'après un actionnement réitéré du clavier, la retransmission de ces suites de signaux se poursuit avec le signal d'opération immédiatement suivant.